# EUROPEAN PATENT APPLICATION

(11) **EP 4 834 519 A1**
(43) Date of publication of application: **04.11.2026**
(21) Application number: 24912959.4
(22) Date of filing: 25.12.2024
(51) Int. Cl.: B23K 35/26, B23K 35/22, C22C 13/00

(54) **SOLDER ALLOY, SOLDER BALL, SOLDER PASTE, AND SOLDERED JOINT**

(30) Priority: 28.12.2023 JP 2023223551
(71) Applicant: Senju Metal Industry Co., Ltd., Tokyo 120-8555 (JP)
(72) Inventor: YOKOYAMA Takahiro, Tokyo 120-8555 (JP); YOSHIKAWA Shunsaku, Tokyo 120-8555 (JP); SUGISAWA Kota, Tokyo 120-8555 (JP)
(74) Representative: Zimmermann & Partner Patentanwälte mbB
(86) International application number: PCT/JP2024/046051
(87) International publication number: WO 2025/143073

(57) **Abstract**

Provided are a solder alloy, a solder paste, a solder ball, and a solder joint which have excellent heat cycle resistance and drop impact resistance, and are excellent in mounting properties by suppressing fusion failure, chip standing, and discoloration. The solder alloy has an alloy composition consisting of Ag: 0.8 to 2.5%, Cu: 0.10 to 1.00%, Ni: 0.03 to 0.07%, Ge: 0.006 to 0.014%, and Co: 0.001 to 0.030%, with the balance being Sn. Preferably, by mass%, the alloy composition further contains at least one of Ga, As, Pd, Mn, In, Zn, Zr, and Mg: 0.1% or less in total.

## Description

### Technical Field

The present invention relates to a solder alloy, a solder ball, a solder paste, and a solder joint.

### Background Art

In recent years, electronic devices have been required to have high integration, large capacity, and high speed. For example, a semiconductor package such as a ball grid array (BGA) is used, and high integration and high functionality at a semiconductor chip level are made.

In a microelectrode such as a BGA, a solder bump is formed using a solder ball. When the solder ball is used, for example, adhesive flux is applied to the microelectrode, and the solder ball is placed on the electrode coated with the flux. Thereafter, the solder ball is melted by being heated in a reflow furnace, and the molten solder wets the microelectrode, and thus the solder bump is formed on the microelectrode. As described above, in the case of using the solder ball, wettability with the electrode is required.

Conventionally, an Sn-Ag-Cu solder alloy has been widely used as the solder alloy for forming the solder bump. This solder alloy has high versatility, and is used in various forms such as a solder ball and a solder paste. However, this solder alloy has high versatility, but has properties that need to be further improved depending on applications such as a solder ball and a solder paste. Therefore, various studies have been conducted on the conventional Sn-Ag-Cu solder alloy which has been widely used, in order to improve the properties depending on applications.

Patent Document 1 discloses a solder alloy for an automotive on-board electronic member in which Ni is an essential element and Co and Ge may be contained as optional elements in order to improve vibration resistance of the Sn-Ag-Cu solder alloy. Patent Document 1 discloses that when a repeated bending test for evaluating vibration resistance is performed, cracks occur in a region of an intermetallic compound layer or a solder alloy depending on an alloy composition.

Therefore, Patent Document 1 discloses that in order to suppress the progress of fracture in the intermetallic compound layer, Ni and Co, which are atomic species having an atomic radius smaller than that of Cu, are substituted with Cu of an SnCu compound, and thus the strain in the intermetallic compound layer can be relieved. In addition, it is disclosed that Fe, Ni, and Co are added, in order to suppress the progress of fracture in the region of the solder alloy.

Patent Document 2 discloses a solder alloy containing Ni and Ge as essential elements and Co as an optional element in an Sn-Ag-Cu solder alloy in order to improve shear strength and suppress fusion failure. In addition, Patent Document 2 discloses that the balance between the contents of Ag, Cu, and Ni and the content of Ge is caused by suppression of fusion failure. Furthermore, Patent Document 2 discloses that the shear strength is improved by refinement and solid solution strengthening of a compound of Cu and Sn.

Patent Document 3 discloses a solder alloy in which a Relation of each constituent element is defined in an Sn-Ag-Cu-Ni-Co-Ge solder alloy in order to suppress the occurrence of Ni leaching and voids. Patent Document 3 discloses that when each constituent element satisfies a predetermined relation, diffusion of Ni is suppressed, and voids occurred in molten solder are easily discharged.

### Citation List

### Patent Document

Patent Document 1: Japanese Unexamined Patent Application Publication No. 2007-237252 A
Patent Document 2: Japanese Patent Publication No. 6928284 B
Patent Document 3: Japanese Patent Publication No. 6700568 B
Patent Document 4: Japanese Unexamined Patent Application Publication No. 2001-58286 A

### Summary of Invention

### Technical Problem

Patent Document 1 discloses an Sn-Ag-Cu-Ni-Fe-Co-solder alloy and an Sn-Ag-Cu-Ni-Fe-Co-Ge-(P) solder alloy as solder alloys having the most excellent results of repeated bending properties. Paragraphs 0036 to 0037 of Patent Document 1 describe that by containing a small amount of Fe, a large amount of an FeSn₂ intermetallic compound is generated as a nucleus of a primary crystal, a dendrite structure is refined, and excellent results are shown in a repeated bending test for evaluating vibration resistance. In addition, paragraphs 0038 to 0039 of Patent Document 1 disclose that when Ni, Co, and Fe are contained, the SnCu intermetallic compound layer becomes thinner and grows uniformly. Furthermore, paragraph 0056 of Patent Document 1 discloses that Ge may be added in order to suppress discoloration of the solder surface.

The invention described in Patent Document 2 is an excellent invention capable of suppressing fusion failure and improving shear strength, and a relation of the content of constituent elements is defined. Paragraph 0035 of Patent Document 2 describes focusing on ΔT, which represents the temperature difference between the liquidus-line temperature and the solidus-line temperature, the viscosity of molten solder, and Ge oxide. In addition, paragraph 0038 of Patent Document 2 discloses that a (Cu, Ni)₆Sn₅ compound in which a part of Cu is substituted with Ni is formed, so that a compound formed at a bonding interface becomes fine. Furthermore, the same paragraph describes an Sn-Ag-Cu-Ni-Ge solder alloy in which Ge dissolves in Ni, thereby inducing strain in the crystal structure of the compound and causing solid-solution strengthening of the (Cu,Ni)₆Sn₅ compound.

The invention described in Patent Document 3 is an excellent invention that suppresses Ni leaching and the occurrence of voids. Paragraph 0044 of Patent Document 3 discloses that elution of the Ni layer can be minimized by utilizing a rapid change in melting temperature caused by Ni. Paragraph 0045 of Patent Document 3 further discloses that a void discharge function resulting from convection of molten solder is maintained by forming a thin and brittle Ge oxide film instead of a strong tin oxide film. Paragraph 0054 of Patent Document 3 further discloses that ΔT is preferably reduced in order to suppress segregation or the like in the alloy structure during solidification.

As described above, in Patent Documents 1 to 3, improvement of vibration resistance, suppression of discoloration, suppression of fusion failure, improvement of shear strength, and suppression of Ni leaching and occurrence of voids have been studied. However, none of the inventions described in these patent documents has studied chip standing. Due to rapid technological innovation in recent years, electronic components have been remarkably downsized and reduced in weight. For this reason, when different amounts of solder alloy are supplied to two electrodes on which an electronic component is mounted, chip standing may occur. Chip standing occurs when a chip is pulled by surface tension on the side of the solder alloy that melts earlier in the solder alloys supplied to the two electrodes. Example of the cause is a difference in the supplied amount of the solder alloy. In addition, there may be a case due to an external factor, that is, a case where there is a difference in the temperature rise of the solder alloy in peripheral components and the like in the mixed mounting on a board even if the solder supply amount is the same. Furthermore, in view of behavior peculiar to the solder alloy, it can be exemplified that the solid phase changes to the liquid phase immediately after the solder alloy starts melting. However, the inventions described in Patent Documents 2 and 3 have not studied chip standing caused by these factors.

Here, paragraph 0032 of Patent Document 4 discloses that Ni, Cu, Co, Ge, and the like may be added to an Sn-Ag solder alloy in order to suppress chip standing. Further, the same paragraph discloses that a solder alloy to which these elements are added exhibits two endothermic peaks in differential thermal analysis. However, only the additive elements are disclosed, and the solder alloys actually are studied only Sn-Ag, Sn-Ag-Cu, Sn-Ag-Ni, and Sn-Ag-P solder alloys. Therefore, no verification has been made at all with respect to Co and Ge, which may be contained in the solder alloys described in Patent Documents 1 to 3.

In addition, when the solder alloy is used for a board used in a severe environment, such as an on-vehicle environment, excellent heat cycle resistance and drop impact resistance are required. However, in the above Patent Documents, heat cycle resistance has not been studied.

As described above, even if the solder alloys described in Patent Documents 1 to 4 can solve their respective problems, it is desired to more fully reflect actual conditions at the time of mounting electronic components. That is, in the inventions described in these documents, no study has been made on a solder alloy that simultaneously satisfies the various properties disclosed in Patent Documents 1 to 4. Furthermore, the use environment has become more severe due to recent global warming, and a solder alloy that also has excellent heat cycle resistance is desired.

Therefore, an object of the present invention is to provide a solder alloy, a solder paste, a solder ball, and a solder joint which have excellent heat cycle resistance and drop impact resistance, and are excellent in mounting properties by suppressing fusion failure, chip standing, and discoloration.

### Solution to Problem

The present inventors have studied each property of the Sn-Ag-Cu-Ni-Ge (-Co) solder alloys disclosed in Patent Documents 1 to 3. First, in the Sn-Ag-Cu-Ni-Ge solder alloy described in Patent Document 2, it has been found that properties change depending on the content of each constituent element.

It has been found that a solder alloy having an Ag content of 0.5% (Example 1 of Patent Document 2) has poor heat cycle resistance, whereas a solder alloy having a high Ag content (Examples 2 to 4, 9 to 11, 14, and 16 to 22 of Patent Document 2) has improved heat cycle resistance. Even in these solder alloys having improved heat cycle resistance, drop impact resistance was poor, and fusion failure, chip standing, and discoloration occurred depending on the alloy composition.

Even in the Sn-Ag-Cu-Ni-Ge-Co solder alloy (Example 29 of Patent Document 2) containing Co that makes the alloy structure fine, the drop impact resistance was poor, and chip standing and discoloration occurred. As described above, in order to solve the above problem, it has been found that the relation described in Patent Document 2 is not sufficient, and further study is necessary.

Example 89 of Patent Document 1 discloses an Sn-Ag-Cu-Ni-Ge-Co-based solder alloy. However, since the Ge content is as small as 0.005% and the Co content is as large as 0.040%, it has been found that fusion failure and discoloration occur.

Example 3 of Patent Document 3 also discloses an Sn-Ag-Cu-Ni-Ge-Co solder alloy. In this alloy composition, since the Ge content is as small as 0.005%, it has been found that discoloration occurs.

As described above, it has become clear that even in the case of the Sn-Ag-Cu-Ni-Ge (-Co) solder alloy, required properties cannot be obtained depending on the content of each constituent element. Here, in order to improve the heat cycle resistance and the drop impact resistance, it is necessary to relieve the stress applied to the solder alloy, so that the alloy structure is desirably fine. To refine the alloy structure, it is considered sufficient that when the temperature is slightly lowered from the liquidus-line temperature, the liquid phase changes into the solid phase in a large amount and that mutual growth is inhibited.

As described above, chip standing occurs when the solder alloys introduced into the two electrodes are melted at different timings. In the electronic components on which the two electrodes are mounted, it is presumed that chip standing occurs because the upper end portion on the melting side of the chip component is pulled due to the influence of surface tension caused by the melting of the solder that melts earlier.

More specifically, it is presumed that when the temperature of the molten solder rises from the solidus-line temperature to the liquidus-line temperature, even if the temperature only slightly rises from the solidus-line temperature, the solid phase changes into a large amount of liquid phase and the influence of surface tension increases, and thus chip standing occurs. On the other hand, it is presumed that when the liquid phase is not formed so much even if the temperature rises from the solidus-line temperature and a large amount of the liquid phase starts to be formed only at a temperature immediately before reaching the liquidus-line temperature, the influence of the surface tension is relatively suppressed, and thus chip standing hardly occurs. Then, it is presumed that this behavior greatly varies depending on the alloy composition of the solder alloy even when ΔT representing the temperature range between the solidus-line temperature and the liquidus-line temperature is approximately the same.

On the other hand, in view of the heat resistance of the chip, it has been found that the Sn-Ag-Cu-Ni-Ge-Co-based solder alloy tends to have a lower liquidus-line temperature when the temperature range of ΔT is narrower. Therefore, it is presumed that the temperature range of ΔT is preferably narrow.

Furthermore, it is presumed that when a strong oxide film is formed on the surface of the solder alloy, fusion failure occurs. On the other hand, when an appropriate oxide film is formed, discoloration can be suppressed. Therefore, it is considered that in order to suppress fusion failure and to suppress discoloration, an appropriate degree of oxidation is necessary.

From the above, it is presumed that in view of the behavior from the solidus-line temperature to the liquidus-line temperature, the heat cycle resistance and the drop impact resistance, and the chip standing each have contradictory directionalities. Similarly, it is presumed that fusion failure and discoloration also each have contradictory directionalities. In the conventional solder alloy, it was difficult for these contradictory alloy structures to simultaneously exhibit the required effects. In addition, it is considered that in order to simultaneously satisfy excellent heat cycle resistance and drop impact resistance, it is necessary to refine the alloy structure, and also to refine the structure of the bonding interface and to strengthen the Sn crystal grains. Conventionally, due to excessive pursuit of each property, an alloy composition in which an effect more than necessary is exhibited has been searched so much for each property, but it is considered that it is easier to adapt to the actual situation of mounting if an appropriate effect is uniformly exhibited.

Therefore, based on the alloy structure and oxidation, the present inventors have studied the contents of the respective constituent elements again in detail to ensure that all effects are realized simultaneously. As a result, it has been found that when the content of each constituent element is within a specific range, the temperature range of ΔT is narrow for the first time, excellent heat cycle resistance and drop impact resistance are exhibited, and fusion failure, chip standing, and discoloration do not occur, and the present invention has been completed.

The present invention obtained from these findings is as follows.

(0) A solder alloy consisting of, by mass%, Ag: 0.8 to 2.5%, Cu: 0.10 to 1.00%, Ni: 0.03 to 0.07%, Ge: 0.006 to 0.014%, and Co: 0.001 to 0.030%, with the balance being Sn.
(1) A solder alloy having an alloy composition consisting of, by mass%, Ag: 0.8 to 2.5%, Cu: 0.10 to 1.00%, Ni: 0.03 to 0.07%, Ge: 0.006 to 0.014%, and Co: 0.001 to 0.030%, with the balance being Sn.
(2) The solder alloy according to (0) or (1) above, wherein the alloy composition further contains, by mass%, at least one of Ga, As, Pd, Mn, In, Zn, Zr, and Mg: 0.1% or less in total.
(3) The solder alloy according to any one of (0) to (2) above, wherein the alloy composition satisfies at least one of the following Relations (1) to (3): $400000 \leq Ag / \left(Cu\times Ni\times Ge\times Co\right) \leq 1458334$ (1) $2.50 \leq Ni / Co \leq 8.40$ (2) $0.000168 \leq Ag \times Cu \times Ni \times Co \leq 0.004900$ (3) wherein Ag, Cu, Ni, Ge, and Co in the Relations (1) to (3) each represent the content in mass% thereof in the solder alloy composition.
(4) A solder ball including the solder alloy according to any one of (0) to (3) above.
(5) A solder paste including the solder alloy according to any one of (0) to (3) above.
(6) A solder joint including the solder alloy according to any one of (0) to (3) above.

### Brief Description of Drawings

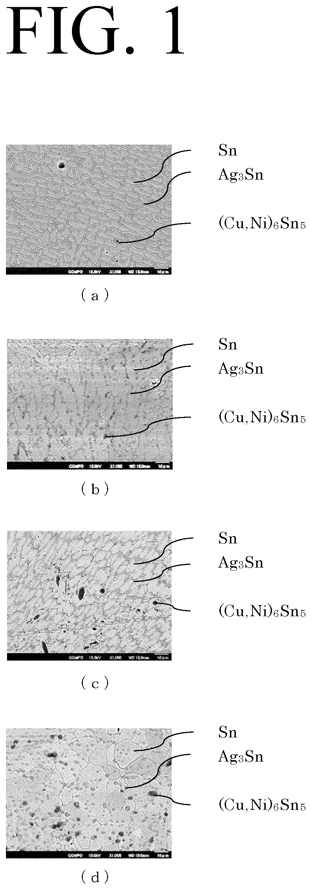

[FIG. 1] FIG. 1 shows cross-sectional SEM photographs of solder alloys before and after a heat cycle test, FIG. 1(a) is a case before the heat cycle test of Example 3, FIG. 1(b) is a case after the heat cycle test of Example 3, FIG. 1(c) is a case before the heat cycle test of Comparative Example 16, and FIG. 1 (d) is a case after the heat cycle test of Comparative Example 16.

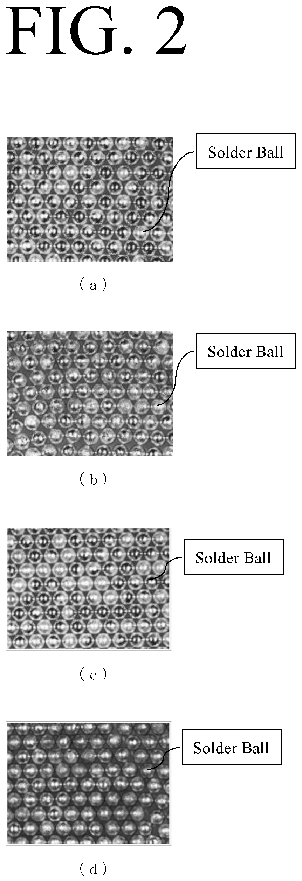

[FIG. 2] FIG. 2 shows optical micrographs of solder balls before and after being left at a high temperature, FIG. 2(a) is a case before being left at a high temperature of Example 3, FIG. 2(b) is a case after being left at a high temperature in Example 3, FIG. 2(c) is a case before being left at a high temperature of Comparative Example 10, and FIG. 2(d) is a case after being left at a high temperature of Comparative Example 10.

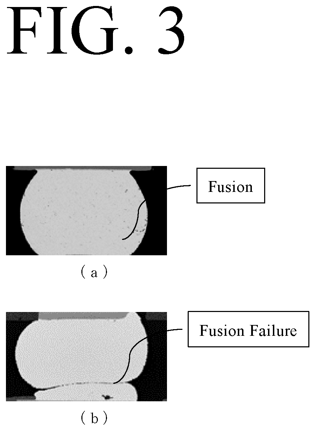

[FIG. 3] FIG. 3 shows cross-sectional SEM photographs representing the presence or absence of fusion failure, FIG. 3(a) is a case of Example 3, and FIG. 3(b) is a case of Comparative Example 8.

### Description of Embodiments

The present invention is described in more detail below. In this description, "%" relating to the solder alloy composition refers to "mass%" unless otherwise specified.

### 1. Solder Alloy

### (1) Ag:0.8 to 2.5%

Ag improves heat cycle resistance and drop impact resistance through precipitation strengthening of the solder alloy by the granular precipitation of Ag₃Sn. In addition, the temperature range of ΔT can be narrowed by lowering the melting point, and chip standing can be suppressed. When the Ag content is less than 0.8%, the precipitation amount of the compound is small, and the heat cycle resistance is poor. In addition, when the Ag, Cu, and Ni contents are too small, a Ge content becomes relatively too large, so that a hard and brittle Ge oxide film is thickly covered, and fusion failure occurs. In terms of the lower limit, the Ag content is 0.8% or more, preferably 1.0% or more, and more preferably 1.2% or more.

On the other hand, when the Ag content is more than 2.5%, the hardness of the solder alloy increases, and stress concentrates on the bonding interface, so that drop impact resistance is poor. In terms of the upper limit, the Ag content is 2.5% or less, preferably 2.3% or less, more preferably 2.0% or less, further preferably 1.6% or less, and particularly preferably 1.4% or less.

In the present invention, the lower limit and the upper limit described above can be appropriately combined in the range of the Ag content. The preferred range of Ag is 1.0 to 1.4%.

### (2) Cu:0.10 to 1.00%

Cu suppresses an increase in melting point. In addition, fusion failure and precipitation of and coarse Cu₆Sn₅ can be suppressed. When the Cu content is less than 0.10%, Cu₆Sn₅ is not sufficiently precipitated, and the heat cycle resistance is poor. In terms of the lower limit, the Cu content is 0.10% or more, preferably 0.20% or more, more preferably 0.30% or more, further preferably 0.40% or more, and particularly preferably 0.50% or more.

On the other hand, when the Cu content is more than 1.00%, coarse Cu₆Sn₅ is precipitated at the bonding interface, and the drop impact resistance is poor. In addition, when the Cu content is significantly more than 1.00%, the temperature range of ΔT is expanded, and fusion failure occurs. In terms of the upper limit, the Cu content is 1.00% or less, preferably 0.90% or less, more preferably 0.80% or less, further preferably 0.70% or less, and particularly preferably 0.60% or less.

In the present invention, the lower limit and the upper limit described above can be appropriately combined to be in the range of the Cu content. The preferred range of Cu is 0.40 to 0.60%.

### (3) Ni:0.03 to 0.07%

Ni suppresses an increase in melting point, suppresses fusion failure, promotes refinement of Sn crystal grains, and improves heat cycle resistance and drop impact resistance. When the Ni content is less than 0.03%, Sn crystal grains do not refine, and the drop impact resistance is poor. In terms of the lower limit, the Ni content is 0.03% or more, preferably 0.04% or more, and more preferably 0.05% or more.

On the other hand, when the content of Ni is more than 0.07%, coarse SnNi alloys are precipitated on the surface of the solder alloy, and fusion failure occurs. In addition, since the liquidus-line temperature rises, the temperature range of ΔT is widened. Furthermore, when the Ni content is further increased, the drop impact resistance is also poor. In terms of the upper limit, the Ni content is 0.07% or less, and preferably 0.06% or less.

In the present invention, the lower limit and the upper limit described above can be appropriately combined to be in the range of the Ni content. The preferred range of Ni is 0.04 to 0.06%.

### (4) Ge:0.006 to 0.014%

Ge can suppress fusion failure and discoloration of the solder alloy. When Ge is not contained, tin oxide is formed on the surface of the molten solder. Tin oxide is strong and hardly broken. On the other hand, Ge added to the solder alloy reacts with oxygen in the atmosphere, and forms a hard and brittle oxide film on the surface of the molten solder. Since the oxide film is brittle, the oxide film is easily broken by convection of the molten solder itself or an external force applied from a chip when the chip is placed. For this reason, the formation of the Sn oxide film is inhibited, and the oxide film is not held on the surface of the molten solder, and conversely to the Sn oxide film, rather, the fusion between the solder ball and the solder powder in the paste is promoted.

In addition, Ge reacts with oxygen in the atmosphere and forms a brittle oxide film, so that discoloration of the solder alloy can be suppressed. It is to be noted that since Ge does not contribute to suppression of supercooling, the time until solidification is delayed, and the Sn crystal grains become fine. In addition, Ge maintains an oxidation preventing and suppressing effect as compared with P used as an oxidation suppressing element. For this reason, particularly when Ge is used for solder balls, it exhibits a Sn crystal grain refinement effect and an oxidation suppression sustaining effect.

When the Ge content is less than 0.006%, discoloration occurs due to generation of tin oxide. In terms of the lower limit, the Ge content is 0.006% or more, preferably 0.007% or more, and more preferably 0.008% or more. On the other hand, when the Ge content is more than 0.014%, thick Ge oxide is generated on the surface of the solder alloy, a hard and brittle Ge oxide film is formed thickly, and fusion failure occurs. In addition, also in a case where the total amount of Ag, Cu, and Ni is relatively small, fusion failure may occur similarly. In terms of the upper limit, the Ge content is 0.014% or less, preferably 0.012% or less, more preferably 0.011% or less, further preferably 0.010% or less, and particularly preferably 0.009% or less.

In the present invention, the lower limit and the upper limit described above can be appropriately combined to be in the range of the Ge content. The preferred range of Ge is 0.006 to 0.012%.

### (5) Co: 0.001 to 0.030%

In the solder alloy according to the present invention, Co suppresses an increase in melting point, and due to a synergistic effect with Ni, suppresses fusion failure, promotes refinement of Sn crystal grains, and improves heat cycle resistance and drop impact resistance. In the solder alloy according to the present invention, the Co content is smaller than that of Ag or Cu, but when Co is not contained, the drop impact resistance is poor, and fusion failure and chip standing occur. Therefore, Co is treated as an essential element in the present invention although it is a trace additive element.

When the Co content is less than 0.001%, refinement of Sn crystal grains is impaired, and the heat cycle resistance is poor. In terms of the lower limit, the Co content is 0.001% or more, preferably 0.004% or more, more preferably 0.006% or more, further preferably 0.0070% or more, and particularly preferably 0.008% or more. On the other hand, when the Co content is more than 0.030%, coarse SnCo compounds are formed on the surface of the solder alloy, so that a solid phase and a liquid phase are simultaneously present in the molten solder, the liquidus-line temperature rises, wettability deteriorates, and fusion failure occurs. In terms of the upper limit, the Co content is 0.030% or less, preferably 0.020% or less, more preferably 0.015% or less, further preferably 0.012% or less, and particularly preferably 0.010% or less.

In the present invention, the lower limit and the upper limit described above can be appropriately combined to be in the range of the Co content. The preferred range of Co is 0.006 to 0.012%.

### (6) Balance: Sn

The balance of the solder alloy according to the present invention is Sn. In addition to the above-described elements, unavoidable impurity may be contained. The balance of the solder alloy according to the present invention may consist of Sn and unavoidable impurities. Even when unavoidable impurity is contained, it does not affect the above-described effects. It is to be noted that, for the suppression of supercooling, P serves as a solidification nucleus for Sn crystal grains, so that the time until solidification becomes long and the Sn crystal grains become too large, and thus it is preferably not contained. In addition, in the present invention, there is a concern that Fe forms an intermetallic compound of SnFe. Along with this, the degree of processing difficulty increases, and thus it is better not to contain Fe.

### (7) At least one of Ga, As, Pd, Mn, In, Zn, Zr, and Mg of 0.1% or less in total

The solder alloy according to the present invention can contain at least one of Ga, As, Pd, Mn, In, Zn, Zr, and Mg in the range of 0.1% or less in total as an optional element to the extent that the effect of the present invention is not impaired. Preferably, the total amount is 0.08% or less. In terms of the lower limit, the content is required to be 0.001% or more although not particularly limited.

(8) Relations (1) to (3) $400000 \leq Ag / \left(Cu\times Ni\times Ge\times Co\right) \leq 1458334$ (1) $2.50 \leq Ni / Co \leq 8.40$ (2) $0.000168 \leq Ag \times Cu \times Ni \times Co \leq 0.004900$ (3)

Ag, Cu, Ni, Ge, and Co in the Relations (1) to (3) each represent the content in mass% thereof in the solder alloy.

The solder alloy according to the present invention can more sufficiently exhibit all the effects by satisfying the Relations (1) to (3). It is preferable that at least one of the Relations (1) to (3) is satisfied, and it is most preferable that all of the Relations (1) to (3) are satisfied. Regarding the Relation (1), Ag is an element that contributes to chip standing, and Cu, Ni, Ge, and Co are elements that contribute to an effect other than chip standing. Regarding the heat cycle resistance and the drop impact resistance, and the chip standing, the behavior from the liquidus-line temperature to the solidus-line temperature is contradictory, but it is preferable that no single effect is excessively emphasized and that a well-balanced overall effect is exhibited.

For this purpose, it is required to control the behavior of the liquid phase and the solid phase in the temperature region from the liquidus-line temperature to the solidus-line temperature. In order to meet the demand in view of such circumstances, it is preferable that the solder alloy according to the present invention satisfies the Relation (1).

In addition, by satisfying the Relation (2), the solder alloy according to the present invention can further improve the synergistic effect of Ni and Co to a sufficient level, and can sufficiently exhibit the refining effect of Sn crystal grains. Furthermore, ΔT is narrow, the occurrence of fusion failure is suppressed, and other effects can also be achieved at the same time.

When the solder alloy according to the present invention satisfies the Relation (3), the balance of constituent elements forming a compound with Sn is extremely improved. For this reason, none of an AgSn compound, a CuSn compound, an NiSn compound, and an SnCo compound precipitates in an excessive amount during solidification. As a result, the solder alloy satisfying the Relation (3) is excellent in heat cycle resistance at a high level.

In terms of the lower limit, the Relation (1) is preferably 400000 or more, more preferably 428571 or more, further preferably 500000 or more, still further preferably 535714 or more, particularly preferably 600000 or more, most preferably 625000 or more, and may be 714286 or more or 750000 or more. In terms of the upper limit, the Relation (1) is preferably 1458334 or less, more preferably 1437500 or less, further preferably 1250000 or less, still further preferably 1000000 or less, particularly preferably 937500 or less, and most preferably 875000 or less.

In the present invention, the lower limit and the upper limit described above can be appropriately combined to be in the range of the Relation (1). A preferred range of the Relation (1) is 600000 to 937500.

In terms of the lower limit, the Relation (2) is preferably 2.50 or more, more preferably 3.75 or more, further preferably 5.00 or more, and still further preferably 6.25 or more. In terms of the upper limit, the Relation (2) is preferably 8.40 or less, more preferably 8.33 or less, and further preferably 7.50 or less.

In the present invention, the lower limit and the upper limit described above can be appropriately combined to be in the range of the Relation (2). A preferred range of the Relation (2) is 5.00 to 7.50.

In terms of the lower limit, the Relation (3) is preferably 0.000168 or more, more preferably 0.000180 or more, further preferably 0.000192 or more, still further preferably 0.000200 or more, and particularly preferably 0.000240 or more. In terms of the upper limit, the Relation (3) is preferably 0.004900 or less, more preferably 0.000900 or less, further preferably 0.000800 or less, still further preferably 0.000480 or less, particularly preferably 0.000460 or less, most preferably 0.000400 or less, and may be 0.000336 or less, 0.000300 or less, 0.000280 or less, or 0.000252 or less.

In the present invention, the lower limit and the upper limit described above can be appropriately combined to be in the range of the Relation (3). A preferred range of the Relation (3) is 0.000200 to 0.000400.

These relations are obtained by mutual dependence of each of the constituent elements. This is because the alloy is an integral body in which all constituent elements are combined, and each constituent element affects each other. As described above, the solder alloy according to the present invention that further satisfies the Relations (1) to (3) after being adjusted to the optimum content of each constituent element is set to a range in which it is sufficiently considered that each constituent element depends on each other. For this reason, when each constituent element is within the above range and further satisfies the Relations (1) to (3), various properties that are conventionally difficult to be compatible can be achieved with one composition, simultaneously, and at a high level.

In the calculation of the Relations (1) to (3), the numerical values as shown in Tables 1 and 2, which are measured values of the alloy composition, have been used. For the values calculated by the Relations (1) to (3), the Relation (1) calculates as an integer value, the Relation (2) calculates up to the second decimal place, and the Relation (3) calculates up to the sixth decimal place. This calculation rule is used in this application and further, is intended to be used as well for calculations relating to further solder alloys as described in other documents, etc., since all solder alloys must be handled in the same way.

It is to be noted that, in Examples described below, "Excellent" indicates that the example is particularly preferable in practical use as compared with "Good". Since "Good" is a more preferable result than the prior art, it is within the scope of the present invention and is treated as an example. Since "Poor" or "Fair" is an insufficient result in the present invention, it is outside the scope of the present invention, and is treated as a comparative example.

### 2. Solder Ball

The solder alloy according to the present invention can be used as a solder ball. The solder ball according to the present invention is used for forming bumps on an electrode or a board of a semiconductor package such as a BGA. The diameter of the solder ball according to the present invention is preferably within a range of 1 to 1000 µm. The solder ball can be manufactured by a general solder ball manufacturing method.

### 3. Solder Paste

A solder paste according to the present invention is a mixture of a solder powder consisting of the alloy composition described above and a flux. A flux to be used in the present invention is not particularly limited as long as soldering by an ordinary method is possible. Therefore, a flux appropriately blended with rosin, an organic acid, an activator, a thixotropic material, and a solvent which are generally used, may be used. Blending ratios of the metal powder component and the flux component in the present invention are preferably the metal powder component: 70 to 90 mass%, the flux component: 10 to 30 mass%, although not particularly limited.

### 4. Solder Joint

A solder joint according to the present invention is preferably used to join at least two or more of members to be joined. The members to be joined are not particularly limited as long as they are electrically connected by using the solder alloy according to the present invention, for example, semiconductor, power module, and inverter products, etc., using boards, electronic components, printed circuit boards, insulated boards, heat sinks, lead frames, and electrode terminals, etc.

### 5. Method for Producing Solder Alloy

The solder alloy according to the present invention is preferably produced by adding a Sn-Ni mother alloy, a Sn-Co mother alloy, and a Sn-Ge mother alloy to an alloy containing Sn and Ag and Cu in predetermined amounts so that the content of each constituent element is a predetermined amount. Since Ni and Co have a high melting point, when Ni and Co are added alone to Sn, they remain undissolved, and the SnNi alloy and the SnCo alloy become coarse. In addition, since Ge has a high melting point, Ge remains undissolved and cannot be usually added alone. Therefore, Ni, Co, and Ge are preferably added to the SnAgCu alloy in the form of a mother alloy with Sn.

### 6. Other

As the solder alloy according to the present invention, by using a low α-ray material as a raw material, a low α-ray alloy can be produced. Such a low α-ray alloy can prevent a soft error when used for forming solder bumps around a memory.

### [Examples]

The present invention will be described based on the following examples, however, the present invention is not limited to the following examples.

In order to verify the effects of the present invention, using the solder alloys shown in Table 1, (1) ΔT was measured, (2) a heat cycle resistance test (TCT) and (3) a drop impact test (DROP) were performed, and the presence or absence of (4) fusion failure, (5) chip standing, and (6) discoloration was confirmed.

### (1) ΔT

For the solder alloys shown in Table 1 and Table 2, each temperature was determined from the DSC curve. The DSC curve was obtained with a DSC (model number: 6200) manufactured by Seiko Instruments Inc., by raising the temperature at 5 °C/min in the atmosphere. The liquidus-line temperature was determined from the obtained DSC curve. In addition, the solidus-line temperature was also evaluated from the DSC curve. A value obtained by subtracting the solidus-line temperature from the liquidus-line temperature was defined as ΔT. When ΔT was less than 11°C, it was determined as "Excellent". When ΔT was 11°C or more and 40°C or less, it was determined as "Good". When ΔT was more than 40°C, it was determined as "Fair".

### (2) Heat Cycle Resistance Test (TCT)

Each of the solder alloys shown in Table 1 and Table 2 was atomized to obtain solder powder. A soldering flux ("GLV" manufactured by SENJU METAL INDUSTRY CO., LTD.) containing pine resin, a solvent, an activator, a thixotropic agent, an organic acid, etc., was mixed to prepare a solder paste of each solder alloy. The alloy powder of the solder paste was 88 mass%, and the flux was 12 mass%. The solder paste was printed on a printed circuit board (material: FR-4) having a thickness of 0.8 mm with a metal mask having a thickness of 100 µm, and then fifteen BGA components were mounted with a mounter and subjected to reflow soldering under the conditions of a maximum temperature of 245°C and a retention time of 60 seconds to prepare a test board.

The prepared test board was placed in a heat cycle test apparatus set under conditions of a low temperature of -40°C, a high temperature +125°C, and a retention time of 10 minutes, and the number of cycles at the time when the resistance value of at least one BGA component becoming more than 15 Ω was determined from 3 to 5 Ω as an initial resistance value. When the number of cycles was 700 or more, it was determined as "Excellent". When the number of cycles was 650 to 699, it was determined as "Good". When the number of cycles was less than 650, it was determined as "Poor".

### (3) Drop Impact Test (DROP)

A solder paste was prepared in the same manner as in (2). The solder paste was printed on a printed circuit board (material: FR-4) having a thickness of 0.8 mm with a metal mask having a thickness of 100 µm, and then five BGA components were mounted on each board with a mounter, and subjected to reflow soldering under the conditions of a maximum temperature of 240°C and a retention time of 60 seconds to prepare two test boards. Thereafter, the BGA components were singulated one by one.

Next, both ends of the test board were fixed to a pedestal with bolts so that the BGA component faces the pedestal side. In this state, the impact resistance was evaluated by applying an impact with an acceleration of 1500G while measuring the electric resistance value according to the JEDEC standards. The situation in which the crack was developing was evaluated by a drop number until the electric resistance value increased by 50% from the initial value. When the drop number was 100 or more, it was determined as "Excellent". When the drop number was 90 or more and less than 100, it was determined as "Good". When the drop number was less than 90, it was determined as "Poor".

### (4) Fusion failure

For the solder alloys shown in Table 1 and Table 2, the presence or absence of fusion failure was verified. As a verification method, a solder alloy prepared according to the composition of each of Examples and Comparative Examples was cast and rolled, and punched to prepare a small piece member (2 mm (length) × 2 mm (width) × 0.1 mm (thickness)). This small piece was formed into a plate shape of a predetermined size, placed on a Cu plate subjected to an OSP (water-soluble preflux (Organic Solderability Presentation)) treatment applied with a flux, and reflowed, and then the surface thereof was washed, and the small piece was placed in an environment of a temperature of 125°C and a humidity of 100%RH for 24 hours.

Further, a solder ball (In this example, the diameter is 300 µm) prepared using a solder alloy (Sn-3.0Ag-0.5Cu) consisting of 3.0% of Ag, 0.5% of Cu, and the balance Sn was placed in an environment of a temperature of 125°C and a humidity of 100%RH for 24 hours in the same manner as the small piece member. Next, a flux was applied onto a sample made of the solder alloy of Example or Comparative Example, and a predetermined number of solder balls were placed thereon. In this example, the number of solder balls was nine, and five samples were prepared for each. Then, reflow was performed under conditions of a maximum temperature of 240°C and a retention time of 60 seconds in the atmosphere, and then the number of solder balls in which fusion failure occurred was counted. The term "fusion failure" refers to a state in which the small piece and the solder ball are not joined. When no fusion failure occurred, it was determined as "Excellent". When at least one fusion failure occurred, it was determined as "Poor".

### (5) Chip Standing

A solder paste was prepared in the same manner as in (2). This solder paste was paste-printed on a Cu land of a six-layer printed circuit board (FR-4, Cu-OSP) with a 150 µm metal mask, and then twelve 3216 chip resistors were mounted with a mounter. Then, melting was performed under heating conditions of a maximum temperature of 245°C and a retention time of 40 seconds, reflowing was performed, and soldering was performed to prepare a test board. The number of chip standings after mounting was counted. When the number of chip standings was 0, it was determined as "Excellent". When the number of chip standings was 1, it was determined as "Good". When the number of chip standings was 2 or more, it was determined as "Poor".

### (6) Discoloration

The solder alloys shown in Tables 1 and 2 were put into a crucible, heated at 245°C for 10 minutes to melt the solder alloys, molten solder was dropped from an orifice provided at the bottom of the crucible, and the generated droplets were rapidly cooled to room temperature (18°C) to form solder balls each having a diameter of 600 µm. The formed solder balls were heated at 300°C for 300 seconds using a constant-temperature bath under an air atmosphere, and a change in brightness was measured. The brightness was determined from the color value (L*, a*, b*) by measuring the spectral transmittance according to JIS Z 8722 "Methods of colour measurement-Reflecting and transmitting objects" with a D65 light source in a 10 degree field of view using a CM-3500d spectrophotometer manufactured by KONICA MINOLTA, INC. It is to be noted that the (L*, a*, b*) is defined in JIS Z 8729 "Colour specification - CIELAB and CIELUV colour spaces". L* is brightness, a* is redness, and b* is yellowness. When the brightness was 70 or more, it was determined as "Excellent". When the brightness was less than 70, it was determined as "Poor".

The results of the evaluation as described above are shown in Tables 1 and 2.

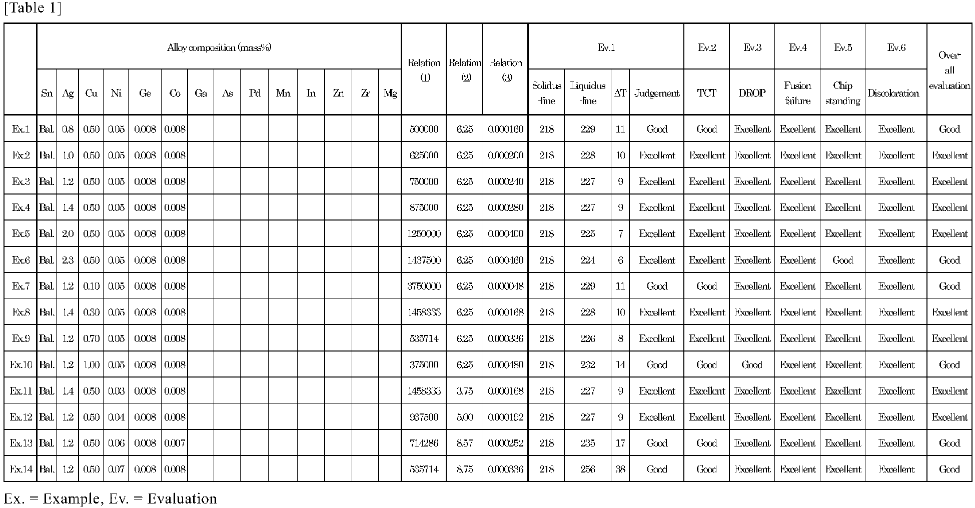

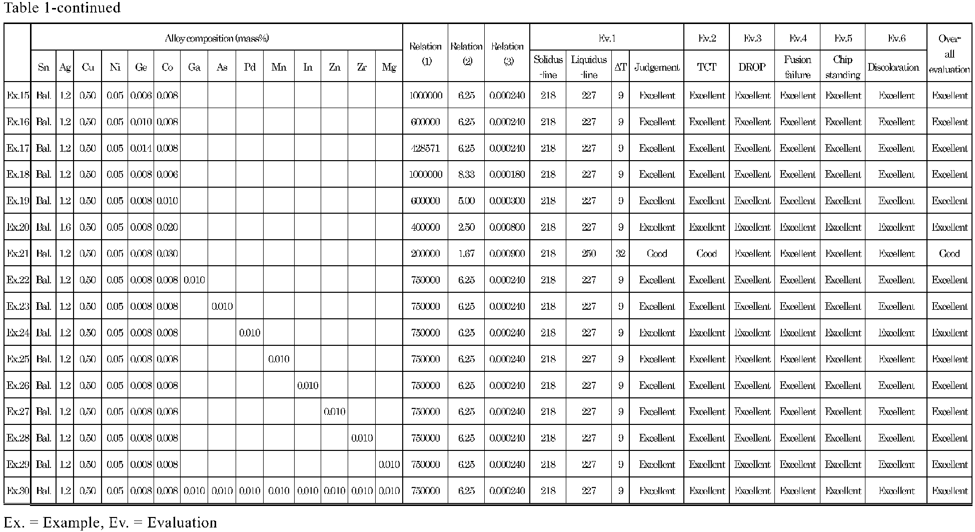

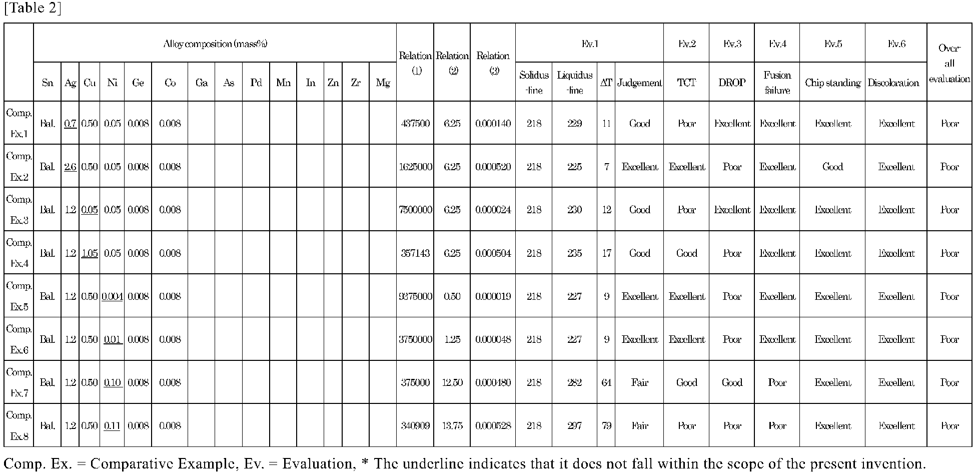

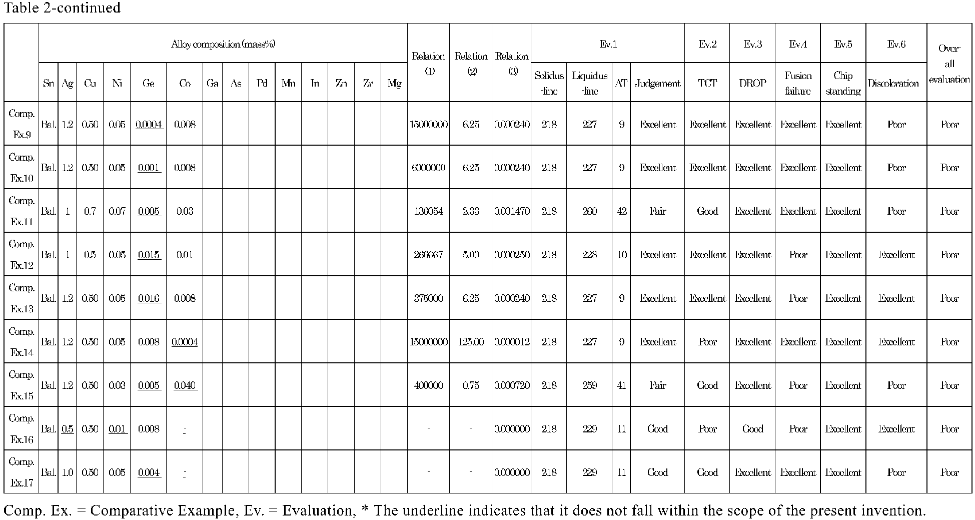

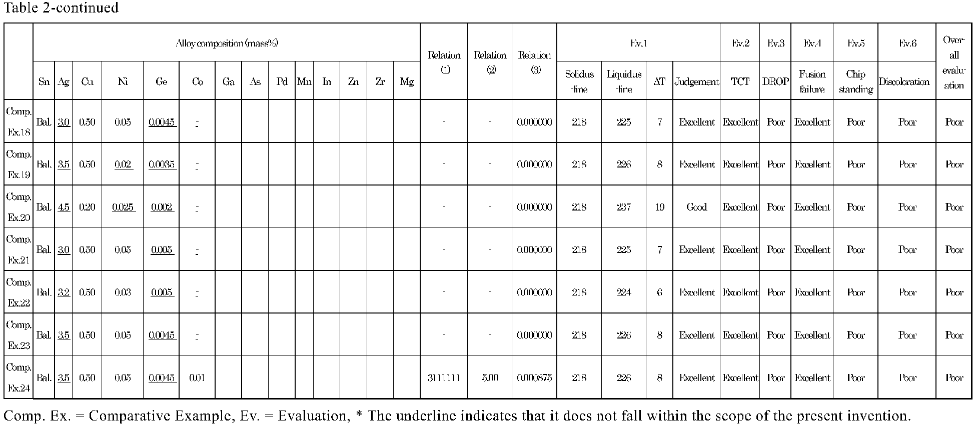

As shown in Table 1, in Examples 1 to 30, all the contents of the respective constituent elements were appropriate, and thus all the evaluations were results that were practically durable. In addition, it was found that Examples 2 to 5, 8, 9, 11, 12, 15 to 20, and 22 to 30 satisfying Relations (1) to (3) exhibited extremely excellent results in all evaluations.

On the other hand, as shown in Table 2, in Comparative Example 1, the Ag content was low, and thus TCT was poor. In Comparative Example 2, the Ag content was high, and thus DROP was poor.

In Comparative Example 3, the Cu content was low, and thus TCT was poor. In Comparative Example 4, the Cu content was high, and thus DROP was poor.

In Comparative Examples 5 and 6, the Ni content was low, and thus DROP was poor. In Comparative Example 7, the Ni content was high, and thus fusion failure occurred and ΔT was widened. In Comparative Example 8, the Ni content was further high, and thus fusion failure occurred, TCT and DROP were poor, and ΔT was widened.

In Comparative Examples 9 to 11, the Ge content was low, and thus discoloration occurred. In Comparative Examples 12 and 13, the Ge content was further high, and thus fusion failure occurred.

In Comparative Example 14, the Co content was low, and thus TCT was poor. In Comparative Example 15, the Co content was high, and thus fusion failure occurred, and the Co content was high, and thus ΔT was widened, fusion failure occurred, and discoloration occurred.

In Comparative Example 16, Co was not contained and the Ag and Ni contents were also low, and thus TCT was poor and fusion failure occurred. In Comparative Example 17, the Ge content was low, and thus discoloration occurred. In Comparative Examples 18 to 24, the Ge content was low and the Ag content was high, and thus DROP was poor and discoloration occurred.

FIG. 1 shows cross-sectional SEM photographs of solder alloys before and after a heat cycle test, FIG. 1(a) is a case before the heat cycle test of Example 3, FIG. 1(b) is a case after the heat cycle test of Example 3, FIG. 1(c) is a case before the heat cycle test of Comparative Example 16, and FIG. 1 (d) is a case after the heat cycle test of Comparative Example 16. As shown in FIGS. 1(a) and 1(b), in Example 3, after the heat cycle test, Sn and Ag₃Sn around Sn were slightly coarse, but coarsening was suppressed to such an extent that the properties were not deteriorated. On the other hand, as shown in FIGS. 1(c) and 1(d), it was found that Sn, Ag₃Sn, and (Cu, Ni)₆Sn₅ were significantly coarse after the heat cycle test of Comparative Example 16.

FIG. 2 shows optical micrographs of solder balls before and after being left at a high temperature, FIG. 2(a) is a case before being left at a high temperature of Example 3, FIG. 2(b) is a case after being left at a high temperature in Example 3, FIG. 2(c) is a case before being left at a high temperature of Comparative Example 10, and FIG. 2(d) is a case after being left at a high temperature of Comparative Example 10. As shown in FIGS. 2(a) and 2(b), in Example 3, oxidation of solder balls was not observed after being left at a high temperature. On the other hand, as shown in FIGS. 2(c) and 2(d), darkening was observed as a whole after being left at a high temperature in Comparative Example 10.

FIG. 3 shows cross-sectional SEM photographs representing the presence or absence of fusion failure, FIG. 3(a) is a case of Example 3, and FIG. 3(b) is a case of Comparative Example 8. As shown in FIG. 3(a), it was found that the solder balls were fused in Example 3. On the other hand, as shown in FIG. 3(b), it was found that fusion failure occurred in Comparative Example 8.

## Claims

1. A solder alloy having an alloy composition consisting of, by mass%,
Ag: 0.8 to 2.5%,
Cu: 0.10 to 1.00%,
Ni: 0.03 to 0.07%,
Ge: 0.006 to 0.014%,
Co: 0.001 to 0.030%, with the balance being Sn.

2. The solder alloy according to claim 1,
wherein, by mass%,
the alloy composition further contains at least one of Ga, As, Pd, Mn, In, Zn, Zr, and Mg: 0.1% or less in total.

3. The solder alloy according to claim 1 or 2,
wherein the alloy composition satisfies at least one of the following Relations (1) to (3): $400000 \leq Ag / \left(Cu\times Ni\times Ge\times Co\right) \leq 1458334$ (1) $2.50 \leq Ni / Co \leq 8.40$ (2) $0.000168 \leq Ag \times Cu \times Ni \times Co \leq 0.004900$ (3)
wherein Ag, Cu, Ni, Ge, and Co in the Relations (1) to (3) each represent the content in mass% thereof in the solder alloy composition.

4. A solder ball comprising the solder alloy according to claim 1 or 2.

5. A solder paste comprising the solder alloy according to claim 1 or 2.

6. A solder joint comprising the solder alloy according to claim 1 or 2.
